# EUROPÄISCHE PATENTSCHRIFT

(11) **EP 0 590 467 B1**
(45) Veröffentlichungstag und Bekanntmachung des Hinweises auf die Patenterteilung: **03.06.1998**
(21) Anmeldenummer: 93115130.2
(22) Anmeldetag: 21.09.1993
(51) Int. Cl.: C08J 7/12, C08J 7/06, B05D 7/24, B05D 3/14

(54) **Verfahren zum Erzeugen von siliciumoxidischen kratzfesten Schichten auf Kunststoffen durch Plasmabeschichtung**
Process for forming scratch-resistant silicon oxide layers on plastics by plasma-coating
Procédé pour la formation des couches d'oxyde de silicium résistant au rayage sur des matières en plastique par revêtement de plasma

(30) Priorität: 26.09.1992 DE 4232390
(43) Veröffentlichungstag der Anmeldung: 06.04.1994
(73) Patentinhaber: HÜLS AKTIENGESELLSCHAFT, 45764 Marl (DE); FRAUNHOFER-GESELLSCHAFT ZUR FÖRDERUNG DER ANGEWANDTEN FORSCHUNG E.V., 80636 München (DE)
(72) Erfinder: Bauser, Herbert, Dr.rer.nat., D-70569 Stuttgart (DE); Benz, Volker, Dr., D-64739 Höchst (DE); Heinemann, Michael, D-64839 Münster (DE); Schindler, Bernd, Dr.rer.nat., D-70178 Stuttgart (DE); Söder, Bernhard, Dr., 96639 Wolframs-Eschenbach (DE)

(56) Entgegenhaltungen:
- EP-A- 0 299 754
- WO-A-85/04601
- WO-A-89/12507
- US-A- 4 649 071
- DATABASE WPI Derwent Publications Ltd., London, GB; AN 83-785845[41] & JP-A-58 147 431 (NIPPON SHEET GLASS KK.) 2. September 1983
- DATABASE WPI Derwent Publications Ltd., London, GB; AN 86-050871[08] & JP-A-61 002 738 (SUMITOMO ELEC. IND. CO.) 8. Januar 1986
- DATABASE WPI Derwent Publications Ltd., London, GB; AN 86-216653[33] & JP-A-61 149 210 (SUMITOMO ELEC. IND. KK.) 7. Juli 1986
- DATABASE WPI Derwent Publications Ltd., London, GB; AN 84-066309[11] & JP-A-59 022 912 (TDK CORP.) 28. Juni 1982

## Beschreibung

Die Erfindung betrifft ein Verfahren zum Erzeugen von siliciumoxidischen kratzfesten Schichten auf Kunststoffen durch Plasmabeschichtung mit einem gasförmigen Organosilan und/oder Organosiloxan, dadurch gekennzeichnet, daß man vor der Plasmabeschichtung mit dem gasförmigen Organosiloxan und/oder Organosiloxan eine Plasmabehandlung mit einer gas- oder dampfförmigen, ungesättigten organischen Verbindung durchführt.

### Stand der Technik

Gemäß WO 85/04601 lassen sich Kunststoffoberflächen durch eine Plasmabeschichtung mittels siliziumorganischer Verbindungen kratzfest ausrüsten. Durch zunehmende Sauerstoffkonzentration während der Beschichtung wird die Härte der kratzfesten Schicht noch gesteigert. Als siliciumorganische Verbindung wird vorzugsweise Hexamethyldisiloxan (HMDS) eingesetzt.

Nach der WO 89/01957 wird zur kratzfesten Ausrüstung von Kunststoffen mittels Plasmapolymerisation zunächst eine Haftschicht aus Organosiloxanen, Acrylaten oder Polyolefinen aufgebracht, die gleitend übergeht in eine kratzfeste Schicht aus Siliciumdioxid. Diese wird aus anorganischem Silan und Stickoxydul (SiH₄ + N₂O) erzeugt.

### Aufgabe und Lösung

Es hat sich gezeigt, daß die Haftfestigkeit von kratzfesten Schichten auf Basis von organischen Silanen oder Siloxanen auf verschiedenen Kunststoffen, wie Polymethylmethacrylat oder aromatischen Polycarbonat-Kunststoffen, nicht befriedigend ist. Der Erfindung liegt die Aufgabe zugrunde, die Haftfestigkeit von siliciumoxidischen kratzfesten Schichten auf Kunststoffen zu verbessern.

Es wurde nun gefunden, daß bei einem Verfahren zum Erzeugen von siliciumoxidischen kratzfesten Schichten auf Kunststoffen durch Plasmabeschichtung mit einem gasförmigen Organosilan oder Organosiloxan dadurch eine verbesserte Haftung erreicht wird, daß man vor oder während der Plasmabeschichtung mit dem gasförmigen Organosilan oder Organo-Siloxan eine Plasmabeschichtung mit einer gasförmigen, ungesättigten organischen Verbindung oder mit Stickstoff durchführt.

Die verbesserte Haftung einer Kratzfestausrüstung geht aus folgendem Vergleichsversuch hervor: Eine Acrylglasscheibe wurde in einer Plasmabeschichtungsanlage bei einem Druck von 0,08 mbar mit Hexamethyldisiloxan behandelt. Im Gitterschnitt-Test erwies sich die Haftung der Beschichtung als ungenügend (GT5). Unter gleichen Bedingungen wurde nach der Lehre der Erfindung eine Acrylglasscheibe zunächst 2 min mit Acetylen bei 50 Watt, anschließend 2 min mit einem Gemisch von Acetylen und Hexamethyldisiloxan bei 100 Watt und schließlich 30 min mit Hexamethyldisiloxan bei 600 Watt behandelt. Die Prüfung der Beschichtung im Gitterschnitt-Test ergab eine sehr gute Haftung (GT0).

### Ausführung der Erfindung

Die Erfindung eignet sich für Kunststoffe, die eine beträchtliche Eigenhärte aufweisen, wie Polymethylmethacrylat, Polycarbonat-Kunststoffe auf Basis von Bisphenol A, Polystyrol oder Hart-PVC. Bevorzugt sind glasklare, farblose oder allenfalls transparent eingefärbte Kunststoffe. Glasklares oder hochglänzendes Polymethylmethacrylat oder Methacrylpolymere, die aus Mischpolymerisaten des Methylmethacrylats mit begrenzten Anteilen von anderen Comonomeren, wie Alkylacrylaten, Alkylmethacrylaten mit mehr als einem C-Atom im Alkylrest oder Acryl- oder Methacrylnitril bestehen, sind besonders bevorzugt. Diese Kunststoffe werden in der Praxis als "Acrylgläser" bezeichnet.

Die zu beschichtenden Kunststoff-Formkörper können auf jede geeignete Weise hergestellt worden sein. Sie werden in ihrer endgültigen, für die Anwendung bestimmten Gestalt erfindungsgemäß beschichtet. Ein gebräuchliches Herstellungsverfahren ist das Gießen von Platten und Blöcken aus monomerem Methylmethacrylat bzw. aus Methylmethacrylat enthaltenden Monomerengemischen. Die Platten oder Blöcke können ein-, beid- oder allseitig kratzfest beschichtet werden. In vielen Fällen werden sie erst durch spanende Verarbeitung oder durch Verformen im thermisch erweichten Zustand zu Formkörpern der gewünschten Gestalt und Oberflächenbeschaffenhheit verarbeitet und dann in der endgültigen Gestalt plasmabeschichtet. Thermoplastisch verarbeitbare Kunststoffe können nach üblichen Verfahren der Extrusion oder des Spritzgießens zu Formkörpern verarbeitet und danach erfindungsgemäß plasmabeschichtet werden. Die Plasmabeschichtung selbst ist für weitere Verformungen wenig geeignet, sofern sie über mäßige elastische Verformungen im üblichen Gebrauch hinausgehen.

Für die Plasmabeschichtung eignen sich besondern gasförmige Organosilane der Formel SiR₄ und Organosiloxane der Formel R₃-Si-O-Si-R₃, worin R gleiche oder verschiedene organische Reste, insbesondere Alkylreste oder Alkoxyreste mit 1 bis 2 C-Atomen darstellen. Sie müssen während der Plasmabeschichtung im gasförmigen Zustand vorliegen. Dazu reicht es aus, daß sie im Beschichtungsplasma einen Arbeitsdruck von wenigstens 0,01 mbar, vorzugsweise von 0,01 bis 1 mbar haben. Bevorzugt sind Organosilane und Organosiloxane mit einem Dampfdruck von 1 bis 10 mbar bei 25°C. Geeignete Organosilane sind z.B. Vinyltrimethylsilan, Tetramethoxysilan, Tetraethoxysilan, Methyltrimethoxysilan. Werden sauerstofffreie Organosilane verwendet, so werden durch Mitverwendung von molekularem Sauerstoff siliciumoxidische Beschichtungen erzeugt. Beispiele geeigneter Organosiloxane sind Hexamethyldisiloxan und Octamethyl-cyclotetrasiloxan. Auch Gemische mehrerer Organosilane und -siloxane können eingesetzt werden.

Während der Plasmabeschichtung soll das Organosilan oder -siloxan mit einem Partialdruck von 0,01 bis 1 mbar in der Beschichtungsvorrichtung, in der ein Gesamtdruck von 0,01 bis 5 mbar herrscht, zumindest jedoch in der Umgebung des zu beschichtenden Substrates vorliegen.

Das wesentliche Merkmal der Erfindung liegt in der Mitverwendung einer gasförmigen, ungesättigten organischen Verbindung oder von molekularem Stickstoff vor oder während der Plasmabeschichtung mit dem Organosilan oder Organosiloxan. Dadurch wird auf dem Substrat ein Haftgrund gebildet, auf dem die kratzfeste Schicht, die durch Abscheidung des Organosilans oder -siloxans entsteht, besonders fest haftet. Vorzugsweise wird die Plasmabehandlung mit der ungesättigten organischen Verbindung bzw. Stickstoff vor der Einwirkung des Organosilans oder -siloxans durchgeführt, weil dieses dann auf dem bereits gebildeten Haftgrund abgeschieden werden kann. Bei gleichzeitiger Einwirkung wird wenigstens ein Teil des Organosilans oder Organosiloxans haftfest auf dem bis dahin entstandenen Haftgrund abgeschieden.

Für den Dampfdruck der ungesättigten organischen Verbindung und ihren Partialdruck während der Plasmabeschichtung gilt das für Organosilane und Organosiloxane Gesagte in entsprechender Weise; d.h. sie soll einen Dampfdruck von 0,01 mbar spätestens bei 150°C, vorzugsweise schon bei 25°C erreichen. Um den erforderlichen Partialdruck erreichen zu können, soll die ungesättigte organische Verbindung vorzugsweise ein Molekulargewicht nicht über 160 Dalton haben. Bei gemeinsamer Einwirkung ist der Partialdruck der ungesättigten organischen Verbindung bzw. des Stickstoffs vorzugsweise kleiner als der des Organosilans oder -siloxans.

Eine Vielzahl von ungesättigten organischen Verbindungen hat sich für das Verfahren der Erfindung als geeignet erwiesen, wenn sie sich auch in ihrer haftverbessernden Wirkung z.T. erheblich unterscheiden. Ungesättigte organische Verbindungen im Sinne der Erfindung sind solche, die sich durch wenigstens eine Doppel- oder Dreifachbindung zwischen benachbarten Kohlenstoff- oder Stickstoffatomen auszeichnen. (Nach der Elektronentheorie der chemischen Bindung besteht die Einfachbindung aus einem Sigma-Elektronenpaar, die Doppelbindung aus einem Sigma- und einem Pi-Elektronenpaar und die Dreifachbindung aus einem Sigma-Elektronenpaar und zwei Pi-Elektronenpaaren. Von konjugierten Doppelbindungen spricht man, wenn im Molekül benachbarte Kohlenstoff- bzw. Stickstoffatome mit jeweils einem weiteren Nachbaratom durch Doppelbindungen verknüpft sind. Ist ein Kohlenstoffatom mit zwei Nachbaratomen durch Doppelbindungen verknüpft, spricht man von kumulierten Doppelbindungen. Nach der Elektronentheorie stehen die Pi-Elektronenpaare konjugierter und kumulierter Doppelbindungen und von Dreifachbindungen miteinander in Verbindung.)

Obwohl die Erfindung nicht auf eine bestimmte elektronische Theorie gegründet werden kann, hat es den Anschein, als ob die Wirksamkeit der ungesättigten organischen Verbindungen von ihren Pi-Elektronensystemen abhinge. Die Anwesenheit eines einzigen Pi-Elektronenpaares scheint eine Grundvoraussetzung für die haftverbessernde Wirkung zu sein. Ein deutlicher haftverbessernder Effekt von technischer Bedeutung wird erreicht, wenn in der ungesättigten organischen Verbindung mehrere Pi-Elektronenpaare in Verbindung stehen. Daher sind bevorzugte ungesättigte organische Verbindungen für die Erfindung solche mit konjugierten oder kumulierten Doppelbindungen oder mit Dreifachbindungen jeweils zwischen Kohlenstoff- oder Stickstoffatomen. Auch molekularer Stickstoff enthält eine Dreifachbindung.

Geeignete Verbindungen mit konjugierten Doppelbindungen sind Butadien und Isopren. Dicyan, Acrylnitril und Methacrylnitril enthalten C=N-Dreifachbindungen und sind daher Beispiele für Verbindungen mit mehr als zwei Pi-Elektronenpaaren. Kumulierte Doppelbindungen sind in Allenen, Ketenimin und Carbodiimid enthalten. Die beiden letzteren können als isomere Grenzformen von Acetonitril und Cyanamid aufgefaßt werden. Butatrien ist ein Beispiel für eine Verbindung mit mehr als zwei Pi-Elektronenpaaren in kumulierter Form.

Bevorzugt sind Verbindungen mit C=C-, C=N- oder N=N-Dreifachbindungen. Dazu gehören Acetylen, Methylacetylen, Blausäure, Acetonitril, Acrylnitril, organische Azide sowie Stickstoff. Acetylen ist die meist bevorzugte ungesättigte organische Verbindung. Es versteht sich, daß auch Mischungen der ungesättigten organischen Verbindungen verwendet werden können.

Die Technik der Plasmabeschichtung von Kunststoffen ist allgemein bekannt und wird beim Verfahren der Erfindung in entsprechender Weise angewendet. Das zu beschichtende Kunststoffsubstrat wird in einer Vakuumkammer einem Plasma ausgesetzt, das in einem Gasgemisch bei einem Druck von etwa 0,001 mbar unter der Einwirkung eines Mikrowellenfeldes von z.B. 2450 MHz oder einer elektromagnetischen Hochfrequenzschwingung von z.B. 13,56 oder 27,1 MHz erzeugt wird. Vorzugsweise besteht das Gasgemisch im wesentlichen oder ausschließlich aus der gasförmigen ungesättigten organischen Verbindung bzw. Stickstoff und/oder dem Organosilan bzw. Organosiloxan. Fremdgase sollen möglichst in einem Gesamt-Partialdruck nicht über 0,5 mbar vorliegen, jedoch hat sich ein Zusatz von Sauerstoff in einem Molverhältnis von 1 : 1 während der Organosilan- bzw. Organosiloxanbehandlung als vorteilhaft erwiesen. Durch die Einwirkung des Sauerstoffes oder anderer oxydierender Gase, wie Stickoxydul (Distickstoffmonoxid), entstehen auch beim Einsatz sauerstofffreier Organosilane siliciumoxidische Beschichtungen, in denen Siliciumatome über Sauerstoffbrücken miteinander verbunden sind.

Die Abscheidungsgeschwindigkeit hängt neben anderen Faktoren von der Leistungsdichte des Plasmas und dem Partialdruck des Beschichtungsgases ab. Für die haftverbessernde Beschichtung aus der abgeschiedenen ungesättigten organischen Verbindung bzw. Stickstoff wird eine Schichtdicke von wenigstens 10, vorzugsweise von 100 bis 400 nm angestrebt. Die kratzfeste Schicht, die durch Abscheidung des Organosilans oder des Organosiloxans erzeugt wird, sollte nicht dünner als 0,5 Mikrometer und vorzugsweise etwa 1 bis 5 Mikrometer dick sein.

Die Beschichtung kann in einem weiten Temperaturbereich durchgeführt werden. Zweckmäßig sind Temperaturen über 0°C, insbesondere Raumtemperatur, d.h. etwa 20 bis 25°C. Höhere Temperaturen sind anwendbar, jedoch soll die Erweichungstemperatur des Kunststoffes im allgemeinen nicht überschritten werden. Vorzugsweise stimmt die Temperatur des Kunststoffes mit der der Beschichtungsanlage etwa überein; der Kunststoff kann erforderlichenfalls nach geeigneter Vortemperierung in die Beschichtungsanlage eingebracht werden. Die Oberflächentemperatur des Kunststoffes soll keinesfalls so niedrig liegen, daß Bestandteile der Atmosphäre in der Beschichtungsanlage darauf kondensieren. Der Kunststoff kann daher wärmer als die Beschichtungsvorrichtung selbst sein.

### BEISPIELE

1. Eine Acrylglasscheibe (PLEXIGLAS^{(R)} 233) wurde in einer Plasmabeschichtungsanlage mit einer Elektrodenfläche von 700 cm² behandelt. Zur Plasmaerzeugung wurde eine HF-Entladung bei 13,56 MHz mit einer maximalen Leistung von 600 Watt angewendet. Bei einem Druck von 0,08 mbar wurde die Scheibe zunächst 2 min mit 0,2 l/min (Normaldruck-Volumen) Acetylen bei 50 Watt, anschließend 2 min mit 0,2 l/min Acetylen und 0,15 g/min Hexamethyldisiloxan bei 100 Watt und schließlich 30 min mit 0,3 g/min Hexamethyldisiloxan bei 600 Watt behandelt. Die Prüfung der Beschichtung im Gitterschnitt-Test ergab eine sehr gute Haftung (GT0).
Zum Vergleich wurde eine gleichartige Scheibe nur 30 min lang bei 600 Watt mit Hexamethyldisiloxan behandelt, das mit einem Fluß von 0,3 g/min gleichmäßig zugegeben wurde. Im Gitterschnitt-Test erwies sich die Haftung der Beschichtung als ungenügend (GT5).
2. Analog Beispiel 1 wurden Acrylglasscheiben (PLEXIGLAS^{(R)} 249) mit Acrylnitril (AN), Stickstoff (N₂), Acetylen (C₂H₂) und Butadien (BUT) vorbehandelt und - gegebenenfalls nach einer Zwischenbehandlung - mit Tetramethoxysilan (TMS), Tetraethoxysilan (TES), Methyltrimethoxysilan (MTMS) oder Octamethylcyclotetrasiloxan (OMCTS) kratzfest beschichtet. Bedingungen und Ergebnisse siehe Tabelle: (sccm bedeutet Kubikcentimeter bei 20°C, 1 bar, pro min)

**TABELLE**

| Beispiel Nr. | 2 | 3 | 4 | 5 |
|---|---|---|---|---|
| Vorbehandlungsstufe: | | | | |
| ungesätt. | | | | |
| Verbindg: | AN | N₂ | C₂H₂ | BUT |
| Zusatz: | - | 5 sccm MTMS | - | - |
| Fluß in sccm: | 5 | 5 | 200 | 200 |
| Leistung Watt | | | | |
| bei 13,5 MHz: | 20 | 20 | 50 | 50 |
| Druck in mbar: | 0,25 | 0,25 | 0,08 | 0,08 |
| Dauer in min: | 5 | 5 | 2 | 5 |
| Elektroden- | | | | |
| fläche in cm²: | 150 | 150 | 800 | 800 |

| Zwischenbehandlungsstufe: | | | | |
|---|---|---|---|---|
| Acetylen: | - | - | 200sccm | - |
| TES: | - | - | 0,1 g/min | - |
| Druck in mbar: | - | - | 0,08 | - |
| Leistung bei 13,5 | MHz: | - | 100 W | - |
| Dauer in min: | - | - | 2 | - |

| Endbehandlungsstufe: | | | | |
|---|---|---|---|---|
| Silan/Siloxan: | TMS | TMS | TES | OMCTS |
| Fluß in sccm: | 5,2 | 5,8 | | |
| in g/min: | | | 0,3 | 0,15 |
| | | | | MTMS |
| in g/min: | | | | 0,40 |
| Sauerstoff sccm: | 4,0 | 4,0 | - | - |
| Druck in mbar: | 0,15 | 0,3 | 0,08 | 0,08 |
| Leistung Watt | | | | |
| bei 13,5 MHz: | 20 | 20 | 600 | 500 |
| Dauer in min: | 15 | 15 | 30 | 5 |

| Ergebnis | | | | |
|---|---|---|---|---|
| Beispiel Nr. | 2 | 3 | 4 | 5 |
| Gitterschnitt | | | | |
| DIN 53 151: | GT0 | GT0 | GT0 | GT0 |
| Kratzfestigkeit | | | | |
| DIN 52 347 | | | | |
| in Cd/m² 1x: | 5 | 5 | 1 | 3 |

## Patentansprüche

1. Verfahren zum Erzeugen von siliciumoxidischen kratzfesten Schichten auf Kunststoffen durch Plasmabeschichtung mit einem gasförmigen Organosilan und/oder Organosiloxan,
dadurch gekennzeichnet,
daß man vor der Plasmabeschichtung mit dem gasförmigen Organosilan und/oder Organosiloxan eine Plasmabehandlung mit einer gas- oder dampfförmigen, ungesättigten organischen Verbindung durchführt.

2. Verfahren nach Anspruch 1, dadurch gekennzeichnet, daß man eine ungesättigte organische Verbindung einsetzt, deren ungesättigte Gruppierung mehr als ein an Kohlenstoff- oder Stickstoffatome gebundenes Pi-Elektronenpaar enthält.

3. Verfahren nach Anspruch 2, dadurch gekennzeichnet, daß man eine ungesättigte organische Verbindung einsetzt, in der wenigstens zwei Pi-Elektronenpaare in konjugierter Stellung stehen.

4. Verfahren nach Anspruch 1 bis 3, dadurch gekennzeichnet, daß man eine ungesättigte Verbindung mit einem Dampfdruck von wenigstens 0,01 mbar bei 150°C einsetzt.

5. Verfahren nach Anspruch 4, dadurch gekennzeichnet, daß man eine ungesättigte Verbindung mit einem Dampfdruck von wenigstens 0,01 mbar bei 25oC einsetzt.

6. Verfahren nach Anspruch 1 bis 5, dadurch gekennzeichnet, daß man eine ungesättigte Verbindung einsetzt, die zwei Pi-Elektronenpaare in Form einer C=C- oder C=N-Dreifachbindung enthält.

7. Verfahren nach Anspruch 1, dadurch gekennzeichnet, daß man eine ungesättigte Verbindung einsetzt, die zwei Pi-Elektronenpaare in Form kumulierter C=C=C- oder C=C=N-Doppelbindungen enthält.

8. Verfahren nach Anspruch 1, dadurch gekennzeichnet, daß man eine ungesättigte Verbindung einsetzt, die mehr als zwei Pi-Elektronenpaare in Form konjugierter Doppelbindungen enthält.

9. Verfahren nach Anspruch 6, dadurch gekennzeichnet, daß man als ungesättigte organische Verbindung mit einer C=C-Dreifachbindung Acetylen einsetzt.

10. Verfahren nach Anspruch 6, dadurch gekennzeichnet, daß man als ungesättigte organische Verbindung mit einer C=N-Dreifachbindung Acetonitril oder Acrylnitril einsetzt.

11. Verfahren nach einem oder mehreren der Ansprüche 1 bis 10, dadurch gekennzeichnet, daß man während der Plasmabeschichtung mit dem gasförmigen Organosilan oder Organosiloxan Sauerstoff oder Wasserstoff einwirken läßt.

12. Verfahren nach einem oder mehreren der Ansprüche 1 bis 11, dadurch gekennzeichnet, daß man als Kunststoff ein Methacrylpolymer einsetzt.

13. Verfahren nach Anspruch 12, dadurch gekennzeichnet, daß man als Methacrylpolymer Polymethylmethacrylat einsetzt.

14. Verfahren nach einem oder mehreren der Ansprüche 1 bis 11, dadurch gekennzeichnet, daß man als Kunststoff ein Polycarbonat einsetzt.

15. Verfahren nach Anspruch 14, dadurch gekennzeichnet, daß man als Polycarbonat das Bisphenol-A-polycarbonat einsetzt.

## Claims

1. A process for producing scratch-resistant silicon oxide layers on plastics by plasma coating using a gaseous organosilane and/or organosiloxane, characterized in that a plasma treatment with a gaseous or vaporized unsaturated organic compound is carried out before the plasma coating using the gaseous organosilane and/or organosiloxane.

2. A process accordingly to claim 1, characterized in that an unsaturated organic compound whose unsaturated group contains more than one pi electron pair bound to carbon or nitrogen atoms is used.

3. A process according to claim 2, characterized in that an unsaturated organic compound in which at least two pi electron pairs are present in conjugated positions is used.

4. A process according to any of claims 1 to 3, characterized in that an unsaturated compound having a vapour pressure of at least 0.01 mbar at 150°C is used.

5. A process according to claim 4, characterized in that an unsaturated compound having a vapour pressure of at least 0.01 mbar at 25°C is used.

6. A process according to any of claims 1 to 5, characterized in that an unsaturated compound containing two pi electron pairs in the form of a C≡C or C≡N triple bond is used.

7. A process according to claim 1, characterised in that an unsaturated compound containing two pi electron pairs in the form of cumulated C=C=C or C=C=N double bonds is used.

8. A process according to claim 1, characterized in that an unsaturated compound containing more than two pi electron pairs in the form of conjugated double bonds is used.

9. A process according to claim 6, characterized in that acetylene is used as unsaturated organic compound containing a C≡C triple bond.

10. A process according to claim 6, characterized in that acetonitrile or acrylonitrile is used as unsaturated organic compound containing a C≡N triple bond.

11. A process according to one or more of claims 1 to 10, characterized in that oxygen or hydrogen is allowed to act during the plasma coating with the gaseous organosilane or organosiloxane.

12. A process according to one or more of claims 1 to 11, characterized in that a methacrylic polymer is used as plastic.

13. A process according to claim 12, characterized in that polymethyl methacrylate is used as methacrylic polymer.

14. A process according to one or more of claims 1 to 11, characterized in that a polycarbonate is used as plastic.

15. A process according to claim 14, characterized in that bisphenol A polycarbonate is used as polycarbonate.

## Revendications

1. Procédé de production de couches de matières synthétiques résistantes au rayage en dioxyde de silicium par enduction plasmatique avec un organosilane et/ou organosiloxane gazeux,
caractérisé en ce qu'
avant l'enduction plasmatique avec un organosilane et/ou organosiloxane gazeux on effectue un traitement plasmatique avec un composé organique insaturé gazeux ou sous forme de vapeur.

2. Procédé selon la revendication 1,
caractérisé en ce qu'
on utilise un composé organique insaturé dont le groupement insaturé contient plus d'une paire d'électrons pi liée aux atomes de carbone ou d'azote.

3. Procédé selon la revendication 2,
caractérisé en ce qu'
on utilise un composé organique insaturé dans lequel au moins deux paires d'électrons pi sont en position conjuguée.

4. Procédé selon les revendications 1 à 3,
caractérisé en ce qu'
on utilise un composé insaturé ayant une pression de vapeur d'au moins 0,01 mbar à 150°C.

5. Procédé selon la revendication 4,
caractérisé en ce qu'
on utilise un composé insaturé ayant une pression de vapeur d'au moins 0,01 mbar à 25°C.

6. Procédé selon les revendications 1 à 5,
caractérisé en ce qu'
on utilise un composé insaturé qui contient deux paires d'électrons pi sous forme d'une liaison triple C≡ C- ou C ≡ N..

7. Procédé selon la revendication 1,
caractérisé en ce qu'
on utilise un composé insaturé qui contient deux paires d'électrons pi sous forme de doubles liaison C=C=C- ou C=C=N- cumulées.

8. Procédé selon la revendication 1,
caractérisé en ce qu'
on utilise un composé insaturé qui contient plus de deux paires d'électrons pi sous forme de doubles liaisons conjugées.

9. Procédé selon la revendication 6,
caractérisé en ce qu'
on utilise comme composé organique insaturé ayant une triple liaison C ≡ C- l'acétylène.

10. Procédé selon la revendication 6,
caractérisé en ce qu'
on utilise comme composé organique insaturé ayant une triple liaison C ≡ N- l'acétonitrile ou l'acrylonitrile.

11. Procédé une ou plusieurs des revendications 1 à 10,
caractérisé en ce que
pendant l'enduction plasmatique avec l'organosilane ou l'organosiloxane gazeux on fait agir de l'oxygène ou de l'hydrogène.

12. Procédé selon une ou plusieurs des revendications 1 à 11,
caractérisé en ce qu'
on utilise comme matière synthétique un polymère méthacrylique.

13. Procédé selon la revendication 12,
caractérisé en ce qu'
on utilise comme polymère méthacrylique un polyméthacrylate de méthyle.

14. Procédé selon l'une ou plusieurs des revendications 1 à 11,
caractérisé en ce qu'
on utilise comme matière synthétique un polycarbonate.

15. Procédé selon la revendication 14,
caractérisé en ce qu'
on utilise comme polycarbonate le polycarbonate de bisphénol A.
